# EUROPÄISCHE PATENTSCHRIFT

(11) **EP 3 412 129 B1**
(45) Veröffentlichungstag und Bekanntmachung des Hinweises auf die Patenterteilung: **19.08.2020**
(21) Anmeldenummer: 17175380.9
(22) Anmeldetag: 09.06.2017
(51) Int. Cl.: A01D 34/00, A01D 34/416

(54) **AUTONOMER MOBILER GRÜNFLÄCHENBEARBEITUNGSROBOTER**
AUTONOMOUS MOBILE GREEN AREA PROCESSING ROBOT
ROBOT DE TRAITEMENT D'ESPACES VERTS MOBILE, AUTONOME

(43) Veröffentlichungstag der Anmeldung: 12.12.2018
(73) Patentinhaber: Andreas Stihl AG & Co. KG, 71336 Waiblingen (DE)
(72) Erfinder: Hans, Matthias, 83088 Kiefersfelden (DE); Lochmann, Holger, 71334 Waiblingen (DE); Totschnig, Andreas, 6380 St. Johann in Tirol (AT)
(74) Vertreter: Patentanwälte Ruff, Wilhelm, Beier, Dauster & Partner mbB

(56) Entgegenhaltungen:
- EP-A1- 1 016 946
- WO-A1-2011/115536
- CN-A- 104 704 980
- US-A- 5 572 856
- US-A1- 2006 010 844
- US-A1- 2007 294 991
- US-B1- 6 474 053

## Beschreibung

### ANWENDUNGSGEBIET UND STAND DER TECHNIK

Die Erfindung bezieht sich auf einen autonomen mobilen Grünflächenbearbeitungsroboter.

Bekannt ist ein autonomer mobiler Rasenmähroboter.

Insbesondere ist aus der WO 2011/115536 A1 ein autonomer Roboterrasenmäher mit einem Körper bedeckt von einem Gehäuse, einer Hauptschneideeinheit und einer Trimmereinheit bekannt. Die Hauptschneideeinheit ist innerhalb des Gehäuses angeordnet. Die Trimmereinheit ist dazu eingerichtet, zwischen einem aktiven Zustand und einem passiven Zustand zu wechseln. Im passiven Zustand führt die Trimmereinheit nicht ein Schneiden durch und in dem aktiven Zustand führt die Trimmereinheit ein Schneiden durch. Des Weiteren erstreckt die Trimmereinheit sich im aktiven Zustand teilweise außerhalb des Gehäuses.

Des Weiteren ist aus der EP 1 016 946 A1 ein Roboterrasenmäher mit einem autonomen Modus und einem manuellen Modus bekannt. Der Roboter weist einen Hauptkörper ausgebildet zum Empfangen von einem Signal von einem Kontrollgerät, ein Erkennungssystem zum Erkennen des Signals und einen Controller in Kommunikation mit dem Erkennungssystem zum Wechseln des Betriebsmodus des Roboters in Übereinstimmung mit dem erkannten Signal auf.

### AUFGABE UND LÖSUNG

Der Erfindung liegt als Aufgabe die Bereitstellung eines autonomen mobilen Grünflächenbearbeitungsroboters zugrunde, der verbesserte Eigenschaften aufweist, insbesondere mehr Funktionalitäten.

Die Erfindung löst diese Aufgabe durch die Bereitstellung eines autonomen mobilen Grünflächenbearbeitungsroboters mit den Merkmalen des Anspruchs 1. Vorteilhafte Weiterbildungen und/oder Ausgestaltungen der Erfindung sind in den abhängigen Ansprüchen beschrieben.

Der erfindungsgemäße autonome mobile Grünflächenbearbeitungsroboter weist ein erstes motorangetriebenes Bearbeitungswerkzeug, ein zweites motorangetriebenes Bearbeitungswerkzeug und ein, insbesondere unten, offenes Schutzgehäuse mit einem Seitenrand auf. Das zweite motorangetriebene Bearbeitungswerkzeug ist von dem ersten Bearbeitungswerkzeug verschieden. Das erste Bearbeitungswerkzeug definiert einen ersten Bearbeitungsbereich und ist derart in dem Schutzgehäuse angeordnet, dass der erste Bearbeitungsbereich, insbesondere vollständig, in einem Sicherheitsbereich des Schutzgehäuses liegt. Der Sicherheitsbereich weist einen Sicherheitsabstand, insbesondere einen Mindestsicherheitsabstand, zu dem Seitenrand auf. Das zweite Bearbeitungswerkzeug definiert einen zweiten Bearbeitungsbereich. Der zweite Bearbeitungsbereich liegt mindestens teilweise, insbesondere vollständig, außerhalb des Sicherheitsbereichs. Der autonome mobile Grünflächenbearbeitungsroboter weist eine autonome Betriebsart auf. In der autonomen Betriebsart ist eine maximale kinetische Energie des zweiten motorangetriebenen Bearbeitungswerkzeugs, insbesondere relativ, kleiner als eine maximale kinetische Energie des ersten motorangetriebenen Bearbeitungswerkzeugs. In der autonomen Betriebsart liegt die maximale kinetische Energie des zweiten motorangetriebenen Bearbeitungswerkzeugs in einem Grenzbereich von 5 bis 25 Joule. Insbesondere kann die maximale kinetische Energie des zweiten motorangetriebenen Bearbeitungswerkzeugs maximal 10 Joule sein.

Da der Sicherheitsbereich den Sicherheitsabstand zu dem Seitenrand aufweist, kann in dem Sicherheitsbereich ein potentiell für Menschen oder Tiere gefährliches Werkzeug mit einer relativ größeren maximalen kinetischen Energie wie das erste motorangetriebene Bearbeitungswerkzeug angeordnet sein. Das Schutzgehäuse und/oder der Sicherheitsabstand können/kann gewährleisten, dass bei Berührung des Grünflächenbearbeitungsroboters mit einem Menschen oder einem Tier, dieser oder dieses nicht ohne weiteres in Kontakt mit dem im Sicherheitsbereich angeordneten ersten Bearbeitungswerkzeug kommen kann. Der Sicherheitsbereich kann als Gefahrenbereich bezeichnet werden. Die maximale kinetische Energie des zweiten motorangetriebenen Bearbeitungswerkzeugs kann in der autonomen Betriebsart als limitiert bezeichnet werden.

Die Anordnung des ersten motorangetriebenen Bearbeitungswerkzeugs in dem Sicherheitsbereich und die kleinere maximale kinetische Energie des zweiten motorangetriebenen Bearbeitungswerkzeugs ermöglichen, erlauben und/oder lassen die autonome Betriebsart des autonomen mobilen Grünflächenbearbeitungsroboters zu. Die autonome Betriebsart kann als Autonombetriebsmodus bezeichnet werden.

Der autonome mobile Grünflächenbearbeitungsroboter ermöglicht eine autonome Bearbeitung einer zu bearbeitenden Fläche mittels seines ersten motorangetriebenen Bearbeitungswerkzeugs. Zusätzlich kann der Grünflächenbearbeitungsroboter mittels seines zweiten motorangetriebenen Bearbeitungswerkzeugs eine autonome Bearbeitung der Fläche auf eine Art und Weise ermöglichen, insbesondere eine Bearbeitung eines Randbereichs und/oder eines Kantenbereichs der Fläche, wie es mittels des ersten Bearbeitungswerkzeugs nicht möglich, erlaubt und/oder zulässig sein kann und/oder darf.

Die zu bearbeitende Fläche kann beispielsweise eine Freifläche, insbesondere ein unversiegelter Boden, oder eine Grünfläche sein, wie eine Wiese mit Rasen. Vorteilhafterweise kann ein Rasenrand und/oder einer Rasenkante mittels des zweiten Bearbeitungswerkzeugs bearbeitet werden.

Das erste motorangetriebene Bearbeitungswerkzeug kann ein erstes motorangetriebenes Schneidwerkzeug umfassen oder sein. Entsprechend kann der erste Bearbeitungsbereich als erster Schneidbereich bezeichnet werden. Das zweite motorangetriebene Bearbeitungswerkzeug kann ein zweites motorangetriebenes Schneidwerkzeug umfassen oder sein. Entsprechend kann der zweite Bearbeitungsbereich als zweiter Schneidbereich bezeichnet werden. Der erste Bearbeitungsbereich kann durch ein Ende des ersten Bearbeitungswerkzeugs definiert sein. Der zweite Bearbeitungsbereich kann durch ein Ende des zweiten Bearbeitungswerkzeugs definiert sein. Das Schutzgehäuse kann als Bearbeitungswerkzeugabdeckung bezeichnet werden. Offen kann bedeuten, dass eine Bearbeitung der zu bearbeitenden Fläche mittels des ersten Bearbeitungswerkzeugs möglich sein kann.

Autonom bearbeiten kann bedeuten, dass der autonome mobile Grünflächenbearbeitungsroboter dazu ausgebildet sein kann, sich auf der zur bearbeitenden Fläche, die vorgegeben sein kann, und/oder in seiner Umgebung selbstständig, selbsttätig, selbstbestimmt, selbstgesteuert und/oder unabhängig von einem Benutzer zu bewegen und/oder zu agieren und/oder zumindest einen Parameter, wie insbesondere einen Streckenparameter, und/oder einen Umkehrpunkt auszuwählen. Autonom bearbeiten kann zusätzlich oder alternativ bedeuten, dass der Grünflächenbearbeitungsroboter dazu ausgebildet sein kann, selbstständig mit einem Bearbeiten zu beginnen und/oder das Bearbeiten zu beenden. In dem Autonombetriebsmodus braucht der Grünflächenbearbeitungsroboter nicht durch den Benutzer gesteuert zu sein, insbesondere nicht ferngesteuert. In anderen Worten: in der autonomen Betriebsart kann der Grünflächenbearbeitungsroboter insbesondere ohne menschliche Steuerung und/oder Führung arbeiten. Der autonome mobile Grünflächenbearbeitungsroboter kann als Serviceroboter und/oder Dienstleistungsroboter bezeichnet werden.

Zusätzlich kann der autonome mobile Grünflächenbearbeitungsroboter mindestens einen Hochhebe- und/oder Kippsensor aufweisen, wobei der Hochhebe- und/oder Kippsensor dazu ausgebildet sein kann, ein Hochheben und/oder ein Kippen des Grünflächenbearbeitungsroboters zu erfassen. Der Grünflächenbearbeitungsroboter kann dazu ausgebildet sein, in Abhängigkeit von einem erfassten Hochheben und/oder Kippen das erste Bearbeitungswerkzeug und/oder das zweite Bearbeitungswerkzeug außer Betrieb zu setzen.

Weiter zusätzlich oder alternativ kann der autonome mobile Grünflächenbearbeitungsroboter mindestens einen Hindernissensor aufweisen, wobei der Hindernissensor dazu ausgebildet sein kann, ein Hindernis zu erfassen. Der Grünflächenbearbeitungsroboter kann dazu ausgebildet sein, in Abhängigkeit von einem erfassten Hindernis das erste Bearbeitungswerkzeug und/oder das zweite Bearbeitungswerkzeug außer Betrieb zu setzen. Beispielsweise kann das Hindernis ein Mensch und/oder ein Tier sein.

Weiter zusätzlich oder alternativ kann der autonome mobile Grünflächenbearbeitungsroboter derart ausgebildet sein, dass das erste motorangetriebene Bearbeitungswerkzeug bei Berührung und/oder Kontakt mit einem Hindernis ausweicht.

In einer Weiterbildung der Erfindung umfassen/umfasst das erste motorangetriebene Bearbeitungswerkzeug und/oder das zweite motorangetriebene Bearbeitungswerkzeug jeweils mindestens einen Mähfaden, mindestens ein Kunststoffmesser, mindestens ein Metallmesser oder ein Metallschneideblatt mit mindestens einer Schneidkante und/oder mit mindestens einem Schneidezahn. Dies kann ein Mähen von Gras, krautigen Pflanzen, holzigem Gestrüpp oder kleineren Gehölzen mittels des ersten Bearbeitungswerkzeugs und/oder des zweiten Bearbeitungswerkzeugs ermöglichen. Das erste Bearbeitungswerkzeug und/oder das zweite Bearbeitungswerkzeug können/kann jeweils als Rasenmähwerkzeug bezeichnet werden. Der Grünflächenbearbeitungsroboter kann als Rasenmähroboter bezeichnet werden, insbesondere kann der Grünflächenbearbeitungsroboter als ein Mulchmähroboter ausgebildet sein.

In einer Weiterbildung der Erfindung sind/ist das erste motorangetriebene Bearbeitungswerkzeug und/oder das zweite motorangetriebene Bearbeitungswerkzeug jeweils als ein rotierendes Bearbeitungswerkzeug ausgebildet. Ein jeweiliger Rotationsbereich kann der entsprechende Bearbeitungsbereich sein. Vorteilhafterweise können/kann das erste Bearbeitungswerkzeug und/oder das zweite Bearbeitungswerkzeug jeweils dazu ausgebildet sein, das zu bearbeitende Gut im sogenannten Freischnittverfahren ohne Gegenschneide zu bearbeiten, insbesondere durch Zentrifugalkraft des entsprechenden Bearbeitungswerkzeugs einen Schneidvorgang zu erzeugen. Die jeweilige kinetische Energie kann als Rotationsenergie bezeichnet werden.

In einer Weiterbildung der Erfindung beträgt der Sicherheitsabstand mindestens 4 Zentimeter (cm), insbesondere mindestens 8 cm, vorteilhafterweise mindestens 15 cm.

In einer Weiterbildung der Erfindung ist der autonome mobile Grünflächenbearbeitungsroboter derart ausgebildet, dass das zweite motorangetriebene Bearbeitungswerkzeug bei Berührung und/oder Kontakt mit einem Hindernis ausweicht. Vorteilhafterweise kann das zweite Bearbeitungswerkzeug elastisch ausgebildet sein. Zusätzlich oder alternativ kann eine Aufnahme des zweiten Bearbeitungswerkzeugs elastisch, flexibel und/oder nachgebend ausgebildet sein. Weiter zusätzlich oder alternativ kann eine Antriebswelle des zweiten Bearbeitungswerkzeugs elastisch ausgebildet sein.

In einer Weiterbildung weist der autonome mobile Grünflächenbearbeitungsroboter ein Begrenzungsranderkennungsgerät und eine Steuereinheit auf. Das Begrenzungsranderkennungsgerät ist zur Erkennung eines Begrenzungsrands der zu bearbeitenden Fläche ausgebildet. Die Steuereinheit ist dazu ausgebildet, mit dem Begrenzungsranderkennungsgerät zusammenzuwirken und, insbesondere in der autonomen Betriebsart, eine Bewegung des Grünflächenbearbeitungsroboters auf der zu bearbeitenden Fläche, insbesondere in Abhängigkeit von einer Erkennung des Begrenzungsrands, derart zu steuern, dass der Grünflächenbearbeitungsroboter auf der zu bearbeitenden Fläche bleibt, insbesondere innerhalb des Begrenzungsrands.

In einer Ausgestaltung der Erfindung ist die Steuereinheit dazu ausgebildet ist, insbesondere in der autonomen Betriebsart, ein Antreiben des zweiten motorangetriebenen Bearbeitungswerkzeugs bei einer Erkennung des Begrenzungsrands zu aktivieren und andernfalls das Antreiben des zweiten Bearbeitungswerkzeugs zu deaktivieren. Dies ermöglicht ein unnötiges Antreiben des zweiten Bearbeitungswerkzeugs zu vermeiden. Das zweite Bearbeitungswerkzeug braucht nur dort angetrieben zu werden, wo es von Interesse sein kann. Dies kann einen Energieverbrauch des Grünflächenbearbeitungsroboters reduzieren. Vorteilhafterweise kann das zweite Bearbeitungswerkzeug nur innerhalb eines Abstands von 2 Metern (m) von dem Begrenzungsrand angetrieben werden, insbesondere innerhalb eines Abstands von 1 m. Deaktivieren kann bedeuten, dass das zweite Bearbeitungswerkzeug von einem Antriebsmotor abgekoppelt sein kann, der Antriebsmotor von einer Antriebsenergiequelle abgekoppelt sein kann und/oder nicht aktiviert sein kann.

In einer Ausgestaltung der Erfindung umfasst das Begrenzungsranderkennungsgerät mindestens einen Magnetfeldsensor. Alternativ umfasst das Begrenzungsranderkennungsgerät einen Satelliten-Positionsbestimmungsempfänger, insbesondere zur Bestimmung von Positionskoordinaten. Weiter Alternativ umfasst das Begrenzungsranderkennungsgerät ein lokales Positionierungssystemgerät, insbesondere zur Bestimmung von Positionskoordinaten. Insbesondere kann die zu bearbeitende Fläche von einem Begrenzungsdraht umgeben sein, wobei ein elektrischer Strom durch den Begrenzungsdraht fließen kann, wobei der elektrische Strom ein abstandsabhängiges Magnetfeld in der Fläche erzeugen kann. Der Begrenzungsdraht kann den Begrenzungsrand definieren. Der Magnetfeldsensor kann dazu ausgebildet sein, das Magnetfeld und somit den Begrenzungsrand zu erkennen, insbesondere innerhalb eines Maximalabstands von dem Begrenzungsrand und/oder dem Begrenzungsdraht. Vorteilhafterweise kann der Satelliten-Positionsbestimmungsempfänger für eines oder mehrere Satelliten-Positionsbestimmungssysteme wie NAVSTAR GPS, GLONASS, Galileo und/oder BeiDou ausgebildet sein. Vorteilhafterweise kann das lokale Positionierungssystemgerät auf einer oder mehreren verschiedenen Technologien basieren wie Abstandsmessungen zu Knotenpunkten, optischen Signalen, Radiowellen, magnetischen Feldern, akustischen Signalen, Ultrabreitband, Bluetooth, WLAN, Ultraschall und/oder RFID. Insbesondere kann das lokale Positionierungssystemgerät ein Empfänger und/oder ein Sender sein. Zusätzlich oder alternativ kann das lokale Positionierungssystemgerät ein aktives Element und/oder ein passives Element sein. Insbesondere kann in dem Begrenzungsranderkennungsgerät eine Abfolge von Begrenzungsrandkoordinaten des Begrenzungsrands hinterlegt sein.

In einer Weiterbildung der Erfindung weist der autonome mobile Grünflächenbearbeitungsroboter eine Benutzersteuerungseinrichtung, eine benutzergesteuerte Betriebsart und eine Betriebsartumschalteinrichtung zur Umschaltung, insbesondere zur automatischen, zwischen der autonomen Betriebsart und der benutzergesteuerten Betriebsart auf. In der benutzergesteuerten Betriebsart ist der Grünflächenbearbeitungsroboter mit seinem ersten motorangetriebenen Bearbeitungswerkzeug und seinem zweiten motorangetriebenen Bearbeitungswerkzeug mittels der Benutzersteuerungseinrichtung durch den Benutzer gesteuert und die maximale kinetische Energie des zweiten motorangetriebenen Bearbeitungswerkzeugs ist, insbesondere relativ, größer als in der autonomen Betriebsart. Die größere kinetische Energie des zweiten Bearbeitungswerkzeugs kann ermöglichen, die zu bearbeitende Fläche auf eine Art und Weise zu bearbeiten, wie es in der autonomen Betriebsart nicht möglich, erlaubt und/oder zulässig sein kann und/oder darf. Gesteuert sein kann bedeuten, dass eine Bewegung des Grünflächenbearbeitungsroboters, ein Antreiben des ersten Bearbeitungswerkzeugs und/oder ein Antreiben des zweiten Bearbeitungswerkzeugs gesteuert sein kann. Die benutzergesteuerte Betriebsart kann als Benutzersteuerungsmodus und/oder kontrollierte und/oder manuelle Betriebsart bezeichnet werden.

In einer Ausgestaltung liegt in der benutzergesteuerten Betriebsart die maximale kinetische Energie des zweiten motorangetriebenen Bearbeitungswerkzeugs oberhalb eines Grenzbereichs von 5 bis 25 Joule. Insbesondere kann die maximale kinetische Energie des zweiten motorangetriebenen Bearbeitungswerkzeugs größer als 10 Joule sein.

In einer Ausgestaltung der Erfindung weist der autonome mobile Grünflächenbearbeitungsroboter einen Antriebsmotor auf. Das zweite motorangetriebene Bearbeitungswerkzeug ist mittels des Antriebsmotors angetrieben. Die Betriebsartumschalteinrichtung ist dazu ausgebildet, bei der Umschaltung von der benutzergesteuerten Betriebsart in die autonome Betriebsart eine maximal verfügbare Antriebsleistung des Antriebsmotors, insbesondere relativ, zu drosseln und/oder zu erniedrigen beziehungsweise zu verringern. Vorteilhafterweise kann die Betriebsartumschalteinrichtung dazu ausgebildet sein, bei der Umschaltung von der autonomen Betriebsart in die benutzergesteuerte Betriebsart eine maximal verfügbare Antriebsleistung des Antriebsmotors, insbesondere relativ, zu erhöhen beziehungsweise zu vergrößern.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine Unteransicht eines erfindungsgemäßen autonomen mobilen Grünflächenbearbeitungsroboters,
- Fig. 2: eine Draufsicht auf den Grünflächenbearbeitungsroboter der Fig. 1,
- Fig. 3: eine Seitenansicht des Grünflächenbearbeitungsroboters der Fig. 1,
- Fig. 4: eine weitere Seitenansicht des Grünflächenbearbeitungsroboters der Fig. 1 und
- Fig. 5: eine Draufsicht auf eine mittels des Grünflächenbearbeitungsroboters der Fig. 1 zu bearbeitende Fläche.

### DETAILLIERTE BESCHREIBUNG DER AUSFÜHRUNGSBEISPIELE

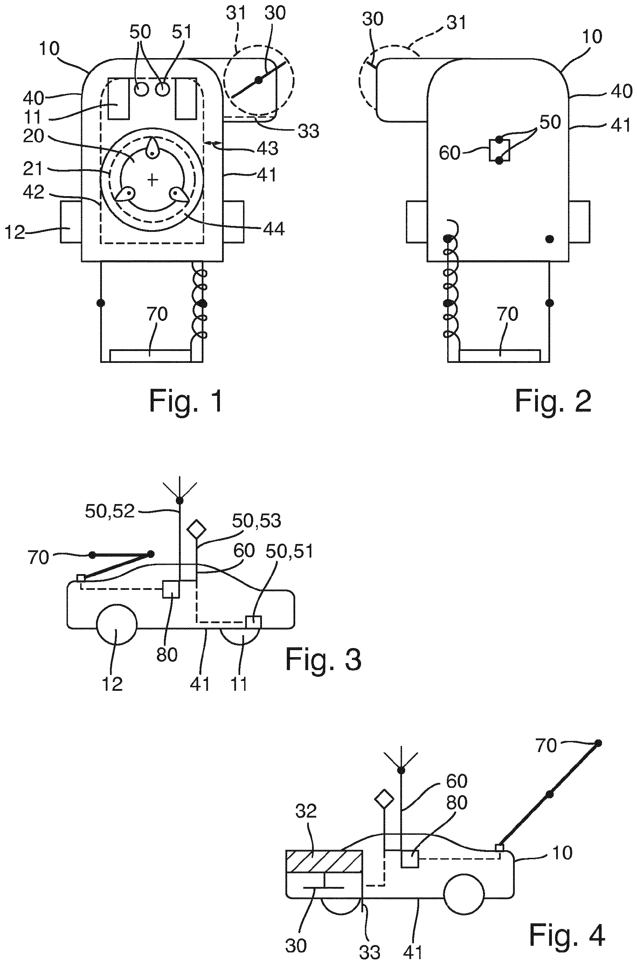

Fig. 1 bis 5 zeigen einen erfindungsgemäßen autonomen mobilen Grünflächenbearbeitungsroboter 10. Der Grünflächenbearbeitungsroboter 10 weist ein erstes motorangetriebenes Bearbeitungswerkzeug 20, ein zweites motorangetriebenes Bearbeitungswerkzeug 30 und ein in Fig. 3 und 4 unten offenes Schutzgehäuse 40 mit einem Seitenrand 41 auf. Im Detail ist der Seitenrand 41 ein Außenrand eines Endes einer Wandung des Schutzgehäuses 40. Das zweite Bearbeitungswerkzeug 30 ist von dem ersten Bearbeitungswerkzeug 20 verschieden. Das erste Bearbeitungswerkzeug 20 definiert einen ersten Bearbeitungsbereich 21. Das erste Bearbeitungswerkzeug 20 ist derart in dem Schutzgehäuse 40 angeordnet, dass der erste Bearbeitungsbereich 41, insbesondere vollständig, in einem Sicherheitsbereich 42 des Schutzgehäuses 40 liegt. Im gezeigten Ausführungsbeispiel ist das erste Bearbeitungswerkzeug 20 in einem durch das Schutzgehäuse 40 definierten Aufnahmeraum 44 angeordnet, insbesondere einem glockenförmigen, wie in Fig. 1 zu erkennen. Der Sicherheitsbereich 42 weist einen Sicherheitsabstand 43 zu dem Seitenrand 41 auf, im Detail von mindestens 8 cm. Das zweite Bearbeitungswerkzeug 30 definiert einen zweiten Bearbeitungsbereich 31. Der zweite Bearbeitungsbereich 31 liegt mindestens teilweise, im gezeigten Ausführungsbeispiel vollständig, außerhalb des Sicherheitsbereichs 42. Im gezeigten Ausführungsbeispiel ist das zweite Bearbeitungswerkzeug 30 vollständig außerhalb des Seitenrands 41 des Schutzgehäuses 40 seitlich angeordnet, wie in Fig. 1 rechts vorne und in Fig. 2 links vorne zu erkennen. Der autonome mobile Grünflächenbearbeitungsroboter 10 weist eine autonome Betriebsart auf. In der autonomen Betriebsart ist eine maximale kinetische Energie Ekin2 des zweiten motorangetriebenen Bearbeitungswerkzeugs 30 kleiner als eine maximale kinetische Energie Ekin1 des ersten motorangetriebenen Bearbeitungswerkzeugs 20. Im Detail ist in der autonomen Betriebsart die maximale kinetische Energie Ekin2 des zweiten Bearbeitungswerkzeugs 30 auf maximal 10 Joule limitiert.

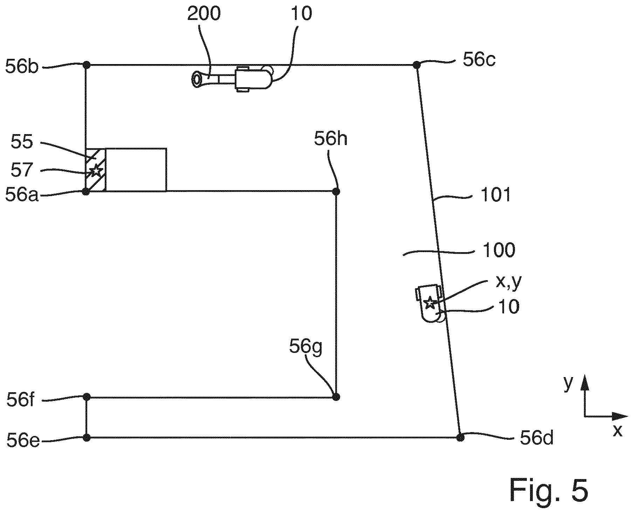

Das Schutzgehäuse 40 und der Sicherheitsabstand 43 gewährleisten, dass bei Berührung des autonomen mobilen Grünflächenbearbeitungsroboters 10 mit einem Menschen oder einem Tier dieser oder dieses nicht ohne weiteres in Kontakt mit dem im Sicherheitsbereich 42 angeordneten ersten Bearbeitungswerkzeug 20 kommen kann. Die Anordnung des ersten motorangetriebenen Bearbeitungswerkzeugs 20 in dem Sicherheitsbereich 42 und die relativ kleine maximale kinetische Energie Ekin2 des zweiten motorangetriebenen Bearbeitungswerkzeugs 30 ermöglichen die autonome Betriebsart des autonomen mobilen Grünflächenbearbeitungsroboters 10. Der Grünflächenbearbeitungsroboter 10 ermöglicht eine autonome Bearbeitung einer in Fig. 5 gezeigten zu bearbeitenden Fläche 100 in Form einer Wiese mit Rasen mittels seines ersten Bearbeitungswerkzeugs 20. Zusätzlich ermöglicht der Grünflächenbearbeitungsroboter 10 eine autonome Bearbeitung der Fläche 100 insbesondere an einem Begrenzungsrand 101 in Form eines Rasenrands mittels seines zweiten Bearbeitungswerkzeugs 30, wie in Fig. 5 rechts unten zu erkennen. Ein Bearbeiten der Fläche 100 am Begrenzungsrand 101 mittels des ersten Bearbeitungswerkzeugs 20 kann aufgrund der Anordnung des ersten Bearbeitungswerkzeugs 20 mit seinem ersten Bearbeitungsbereich 21 in dem Sicherheitsbereich 42 des Schutzgehäuses 40 mit dem Sicherheitsabstand 43 verhindert oder nicht möglich sein. Dies kann insbesondere dann der Fall sein, wenn der Begrenzungsrand 101 durch eine Grenzwand und/oder einen Grenzzaun definiert ist.

Im Detail ist der autonome mobile Grünflächenbearbeitungsroboter 10 als ein Rasenmähroboter ausgebildet, insbesondere als ein Mulchmähroboter. Im gezeigten Ausführungsbeispiel umfasst das erste Bearbeitungswerkzeug 20 ein Metallschneideblatt mit drei Schneidezähnen. In alternativen Ausführungsbeispielen kann das erste Bearbeitungswerkzeug nur einen einzigen Schneidezahn, zwei oder mehr als drei Schneidezähne umfassen. Das erste Bearbeitungswerkzeug 20 ist als ein rotierendes Bearbeitungswerkzeug und dazu ausgebildet, die Fläche 100 im Freischnittverfahren zu bearbeiten, insbesondere durch Zentrifugalkraft des ersten Bearbeitungswerkzeugs 20 einen Schneidvorgang zu erzeugen. Das erste Bearbeitungswerkzeug 20 beziehungsweise ein Ende oder ein äußerster Punkt eines der Schneidezähne definiert den ersten Bearbeitungsbereich 21, im gezeigten Ausführungsbeispiel einen kreisförmigen ersten Bearbeitungsbereich. Des Weiteren ist der autonome mobile Grünflächenbearbeitungsroboter 10 beziehungsweise sein erstes Bearbeitungswerkzeug 20 derart ausgebildet, dass das erste Bearbeitungswerkzeug 20 beziehungsweise seine Schneidezähne bei Berührung mit einem Hindernis ausweichen.

Das zweite Bearbeitungswerkzeug 30 umfasst einen Mähfaden aus Nylon. Das zweite Bearbeitungswerkzeug 30 ist als ein rotierendes Bearbeitungswerkzeug und dazu ausgebildet, die Fläche 100 beziehungsweise ihren Begrenzungsrand 101 im Freischnittverfahren zu bearbeiten, insbesondere durch Zentrifugalkraft des zweiten Bearbeitungswerkzeugs 30 einen Schneidvorgang zu erzeugen. Das zweite Bearbeitungswerkzeug 30 beziehungsweise ein Ende oder ein äußerster Punkt des Mähfadens definiert den zweiten Bearbeitungsbereich 31, im gezeigten Ausführungsbeispiel einen kreisförmigen zweiten Bearbeitungsbereich. Des Weiteren ist der autonome mobile Grünflächenbearbeitungsroboter 10 beziehungsweise sein zweites Bearbeitungswerkzeug 30 derart ausgebildet, dass das zweite Bearbeitungswerkzeug 30 beziehungsweise sein Mähfaden bei Berührung mit einem Hindernis ausweicht.

Außerdem weist der autonome mobile Grünflächenbearbeitungsroboter 10 ein Begrenzungsranderkennungsgerät 50 und eine Steuereinheit 60 auf. Das Begrenzungsranderkennungsgerät 50 ist zur Erkennung des Begrenzungsrands 101 ausgebildet. Die Steuereinheit 60 ist dazu ausgebildet, mit dem Begrenzungsranderkennungsgerät 50 zusammenzuwirken, wie in Fig. 3 und 4 durch gestrichelte Linien angedeutet, und, insbesondere in der autonomen Betriebsart, eine Bewegung des Grünflächenbearbeitungsroboters 10 auf der zu bearbeitenden Fläche 100, insbesondere in Abhängigkeit von einer Erkennung des Begrenzungsrands 101, derart zu steuern, dass der Grünflächenbearbeitungsroboter 10 auf der Fläche 100 bleibt, insbesondere innerhalb des Begrenzungsrands 101, wie in Fig. 5 zu erkennen.

Im Detail ist die Steuereinheit 60 dazu ausgebildet, insbesondere in der autonomen Betriebsart, ein Antreiben des zweiten motorangetriebenen Bearbeitungswerkzeugs 30 bei einer Erkennung des Begrenzungsrands 101 zu aktivieren, insbesondere nur innerhalb eines Abstands von 1 m von dem Begrenzungsrand 101 entfernt, und andernfalls das Antreiben des zweiten Bearbeitungswerkzeugs 30 zu deaktivieren.

Das Begrenzungsranderkennungsgerät 50 umfasst zwei Magnetfeldsensoren 51. In alternativen Ausführungsbeispielen kann das Begrenzungsranderkennungsgerät nur einen einzigen Magnetfeldsensor oder mindestens drei Magnetfeldsensoren umfassen. Im gezeigten Ausführungsbeispiel ist die Fläche 100 von einem Begrenzungsdraht umgeben, wobei ein elektrischer Strom durch den Begrenzungsdraht fließt, wobei der elektrische Strom ein abstandsabhängiges Magnetfeld in der Fläche 100 erzeugt. Der Begrenzungsdraht definiert den Begrenzungsrand 101. Die Magnetfeldsensoren 51 sind dazu ausgebildet, das Magnetfeld und somit den Begrenzungsrand 101 zu erkennen, insbesondere innerhalb des Abstands von 1 m von dem Begrenzungsrand 101 beziehungsweise dem Begrenzungsdraht entfernt. Im Detail sind die beiden Magnetfeldsensoren 51 derart in dem Grünflächenbearbeitungsroboter 10 angeordnet, dass das Begrenzungsranderkennungsgerät 50 und/oder die Steuereinheit 60 eine Ausrichtung des Grünflächenbearbeitungsroboters 10 zu einem erkannten nächstliegenden Abschnitt des Begrenzungsdrahts bestimmen können/kann und die Steuereinheit 60 entsprechend die Bewegung des Grünflächenbearbeitungsroboters 10 steuern kann.

Zusätzlich umfasst das Begrenzungsranderkennungsgerät 50 einen Satelliten-Positionsbestimmungsempfänger 52, insbesondere zur Bestimmung von Positionskoordinaten x, y. In dem Begrenzungsranderkennungsgerät 50 ist eine Abfolge von Begrenzungsrandkoordinaten des Begrenzungsrands 101 hinterlegt. Im gezeigten Ausführungsbeispiel ist ein weiterer Satelliten-Positionsbestimmungsempfänger 57 vorhanden, der stationär im Bereich der Fläche 100 angeordnet ist, wie in Fig. 5 zu erkennen. Der Satelliten-Positionsbestimmungsempfänger 52 und der weitere Satelliten-Positionsbestimmungsempfänger 57 sind dazu ausgebildet, in Signalverbindung miteinander zu stehen, um eine relativ genaue Positionsbestimmung zu ermöglichen.

Weiter zusätzlich umfasst das Begrenzungsranderkennungsgerät 50 ein lokales Positionierungssystemgerät 53, insbesondere zur Bestimmung von Positionskoordinaten x, y. In dem Begrenzungsranderkennungsgerät 50 ist eine Abfolge von Begrenzungsrandkoordinaten des Begrenzungsrands 101 hinterlegt. Im gezeigten Ausführungsbeispiel ist das lokale Positionierungssystemgerät 53 ein passives Element. Des Weiteren sind aktive Elemente 56a, b, c, d, e, f, g, h vorhanden, die im Bereich der Fläche 100 angeordnet sind, insbesondere in ihren Ecken. Das lokale Positionierungssystemgerät 53 und die aktiven Elemente 56a-h sind dazu ausgebildet, miteinander zusammenzuwirken, um eine Positionsbestimmung zu ermöglichen.

In alternativen Ausführungsbeispielen kann es ausreichen, dass das Begrenzungsranderkennungsgerät nur den mindestens einen Magnetfeldsensor, nur den Satelliten-Positionsbestimmungsempfänger oder nur das lokale Positionierungssystemgerät umfassen kann.

Zudem weist der autonome mobile Grünflächenbearbeitungsroboter 10 eine Benutzersteuerungseinrichtung 70, eine benutzergesteuerte Betriebsart und eine Betriebsartumschalteinrichtung 80 zur Umschaltung, insbesondere zur automatischen, zwischen der autonomen Betriebsart und der benutzergesteuerten Betriebsart auf. In der benutzergesteuerten Betriebsart ist der Grünflächenbearbeitungsroboter 10 mit seinem ersten motorangetriebenen Bearbeitungswerkzeug 20 und seinem zweiten motorangetriebenen Bearbeitungswerkzeug 30 mittels der Benutzersteuerungseinrichtung 70 durch einen Benutzer 200 gesteuert, wie in Fig. 5 oben zu erkennen, und die maximale kinetische Energie Ekin2 des zweiten motorangetriebenen Bearbeitungswerkzeugs 30 ist größer als in der autonomen Betriebsart, im Detail größer als 10 Joule.

Im gezeigten Ausführungsbeispiel umfasst die Benutzersteuerungseinrichtung 70 eine Drahtfernsteuerung. Die Drahtfernsteuerung ist zwischen einer Steuerstellung, wie in Fig. 4 zu erkennen, und einer Lagerstellung verstellbeweglich, wie in Fig. 3 zu erkennen. Die Betriebsartumschalteinrichtung 80 ist dazu ausgebildet, die Steuerstellung zu erkennen und, insbesondere in Folge dessen, den Grünflächenbearbeitungsroboter 10 in die benutzergesteuerte Betriebsart umzuschalten und die Lagerstellung zu erkennen und, insbesondere in Folge dessen, den Grünflächenbearbeitungsroboter in die autonome Betriebsart umzuschalten. Im Detail umfasst der Grünflächenbearbeitungsroboter 10 eine verstellbare Schiebestange und die Drahtfernsteuerung ist an dieser befestigt. Die Betriebsartumschalteinrichtung 80 ist dazu ausgebildet, eine Stellung der Schiebestange zu erkennen, wie in Fig. 3 und 4 durch gestrichelte Linien angedeutet. In der benutzergesteuerten Betriebsart kann der Benutzer 200 den Grünflächenbearbeitungsroboter 10 mit seinem ersten Bearbeitungswerkzeug 20 und seinem zweiten Bearbeitungswerkzeug 30 mittels der Schiebestange in der Steuerstellung schieben und lenken und mittels der Benutzersteuerungseinrichtung 70 steuern, wie in Fig. 5 oben zu erkennen.

In alternativen Ausführungsbeispielen kann die Benutzersteuerungseinrichtung einen Fernsteuerungsempfänger zur drahtlosen und/oder kabellosen Steuerung des Grünflächenbearbeitungsroboters in seiner benutzergesteuerten Betriebsart mittels einer drahtlosen Steuerverbindung umfassen. Die Betriebsartumschalteinrichtung kann dazu ausgebildet sein, eine Herstellung und/oder eine Unterbrechung der drahtlosen Steuerverbindung zu erkennen, und insbesondere in Folge dessen, den Grünflächenbearbeitungsroboter in seine benutzergesteuerte Betriebsart und/oder in seine autonome Betriebsart umzuschalten.

Weiter weist der autonome mobile Grünflächenbearbeitungsroboter 10 einen Antriebsmotor 32 auf. Das zweite motorangetriebene Bearbeitungswerkzeug 30 ist mittels des Antriebsmotors 32 angetrieben. Die Betriebsartumschalteinrichtung 80 ist dazu ausgebildet, bei der Umschaltung von der benutzergesteuerten Betriebsart in die autonome Betriebsart eine maximal verfügbare Antriebsleistung Pow2 des Antriebsmotors 32 zu drosseln. Zusätzlich ist die Betriebsartumschalteinrichtung 80 dazu ausgebildet, bei der Umschaltung von der autonomen Betriebsart in die benutzergesteuerte Betriebsart die maximal verfügbare Antriebsleistung Pow2 des Antriebsmotors 32 zu erhöhen.

Außerdem weist der autonome mobile Grünflächenbearbeitungsroboter 10 einen hier nicht dargestellten Antriebsmotor zum Antrieb des ersten motorangetriebenen Bearbeitungswerkzeugs 20 auf. Der Antriebsmotor 32 für das zweite Bearbeitungswerkzeug 30 und/oder der Antriebsmotor für das erste Bearbeitungswerkzeug 20 können/kann jeweils ein Elektromotor oder ein Verbrennungsmotor, insbesondere ein Benzinmotor, sein. Zudem weist der Grünflächenbearbeitungsroboter 10 eine nicht dargestellte Antriebsenergiequelle zur Antriebsenergieversorgung der Antriebsmotoren auf. Die Antriebsenergiequelle kann ein Akkumulator, eine Brennstoffzelle und/oder ein Kraftstofftank sein. Vorliegend sollen die Antriebsmotoren Elektromotoren sein und die Antriebsenergiequelle soll ein Akkumulator sein. In alternativen Ausführungsbeispielen kann es ausreichen, wenn der Grünflächenbearbeitungsroboter nur einen einzigen Antriebsmotor zum Antrieb des ersten Bearbeitungswerkzeugs und des zweiten Bearbeitungswerkzeugs aufweist. Die maximale kinetische Energie des zweiten Bearbeitungswerkzeugs kann über eine Kupplung und/oder ein Getriebe einstellbar und/oder verstellbar sein.

Des Weiteren ist eine Basisstation 55 für den autonomen mobilen Grünflächenbearbeitungsroboter 10 vorgesehen, die hier an dem Begrenzungsrand 101 angeordnet ist, wie in Fig. 5 links oben zu erkennen. Im gezeigten Ausführungsbeispiel ist die Basisstation 55 als eine Ladestation zum Wiederaufladen, insbesondere zum automatischen, des Akkumulators des Grünflächenbearbeitungsroboters 10 ausgebildet. Des Weiteren umfasst die Basisstation 55 den weiteren Satelliten-Positionsbestimmungsempfänger 57.

Außerdem weist der autonome mobile Grünflächenbearbeitungsroboter 10 vordere Laufräder 11, die schwenkbar sind, und hintere Laufräder 12 auf, die getrennt voneinander angetrieben sind. Somit kann sich der autonome mobile Grünflächenbearbeitungsroboter 10 auf der Fläche 100 selbständig bewegen und lenken.

Zudem weist der Grünflächenbearbeitungsroboter 100 einen Benutzerschutz 33 zum Schutz des Benutzers 200 vor von dem zweiten Bearbeitungswerkzeug 30 abgeschnittenem und/oder weggeschleudertem Gut auf.

Wie die gezeigten und oben erläuterten Ausführungsbeispiele deutlich machen, stellt die Erfindung einen vorteilhaften autonomen mobilen Grünflächenbearbeitungsroboter bereit, der verbesserte Eigenschaften aufweist, insbesondere mehr Funktionalitäten. Insbesondere ermöglichen die Anordnung des ersten motorangetriebenen Bearbeitungswerkzeugs in dem Sicherheitsbereich und die relativ kleine maximale kinetische Energie des zweiten motorangetriebenen Bearbeitungswerkzeugs die autonome Betriebsart des autonomen mobilen Grünflächenbearbeitungsroboters. Der autonome mobile Grünflächenbearbeitungsroboter ermöglicht eine autonome Bearbeitung der zu bearbeitenden Fläche mittels seines ersten motorangetriebenen Bearbeitungswerkzeugs. Zusätzlich ermöglicht der Grünflächenbearbeitungsroboter mittels seines zweiten motorangetriebenen Bearbeitungswerkzeugs eine autonome Bearbeitung der Fläche auf eine Art und Weise, insbesondere eine Bearbeitung eines Randbereichs der Fläche, wie es mittels des ersten Bearbeitungswerkzeugs nicht möglich ist.

## Patentansprüche

1. Autonomer mobiler Grünflächenbearbeitungsroboter (10) aufweisend:
ein erstes motorangetriebenes Bearbeitungswerkzeug (20),
ein von dem ersten Bearbeitungswerkzeug verschiedenes zweites motorangetriebenes Bearbeitungswerkzeug (30) und
ein offenes Schutzgehäuse (40) mit einem Seitenrand (41),
wobei das erste Bearbeitungswerkzeug einen ersten Bearbeitungsbereich (21) definiert und derart in dem Schutzgehäuse angeordnet ist, dass der erste Bearbeitungsbereich in einem Sicherheitsbereich (42) des Schutzgehäuses liegt, wobei der Sicherheitsbereich einen Sicherheitsabstand (43) zu dem Seitenrand aufweist,
wobei das zweite Bearbeitungswerkzeug einen zweiten Bearbeitungsbereich (31) definiert, wobei der zweite Bearbeitungsbereich mindestens teilweise außerhalb des Sicherheitsbereichs liegt, und
wobei der autonome mobile Grünflächenbearbeitungsroboter (10) eine autonome Betriebsart aufweist,
**dadurch gekennzeichnet, dass**
in der autonomen Betriebsart eine maximale kinetische Energie (Ekin2) des zweiten motorangetriebenen Bearbeitungswerkzeugs kleiner als eine maximale kinetische Energie (Ekin1) des ersten motorangetriebenen Bearbeitungswerkzeugs ist, wobei in der autonomen Betriebsart die maximale kinetische Energie (Ekin2) des zweiten motorangetriebenen Bearbeitungswerkzeugs (30) in einem Grenzbereich von 5 bis 25 Joule liegt.

2. Autonomer mobiler Grünflächenbearbeitungsroboter (10) nach Anspruch 1,
wobei das erste motorangetriebene Bearbeitungswerkzeug (20) und/oder das zweite motorangetriebene Bearbeitungswerkzeug (30) jeweils mindestens einen Mähfaden, mindestens ein Kunststoffmesser, mindestens ein Metallmesser oder ein Metallschneideblatt mit mindestens einer Schneidkante und/oder mit mindestens einem Schneidezahn umfassen/umfasst.

3. Autonomer mobiler Grünflächenbearbeitungsroboter (10) nach Anspruch 1 oder 2, wobei das erste motorangetriebene Bearbeitungswerkzeug (20) und/oder das zweite motorangetriebene Bearbeitungswerkzeug (30) jeweils als ein rotierendes Bearbeitungswerkzeug ausgebildet sind/ist.

4. Autonomer mobiler Grünflächenbearbeitungsroboter (10) nach einem der vorhergehenden Ansprüche,
wobei der Sicherheitsabstand (43) mindestens 4 cm beträgt.

5. Autonomer mobiler Grünflächenbearbeitungsroboter (10) nach einem der vorhergehenden Ansprüche,
wobei der autonome mobile Grünflächenbearbeitungsroboter (10) derart ausgebildet ist, dass das zweite motorangetriebene Bearbeitungswerkzeug (30) bei Berührung mit einem Hindernis ausweicht.

6. Autonomer mobiler Grünflächenbearbeitungsroboter (10) nach einem der vorhergehenden Ansprüche, wobei der autonome mobile Grünflächenbearbeitungsroboter (10)
ein Begrenzungsranderkennungsgerät (50), wobei das Begrenzungsranderkennungsgerät zur Erkennung eines Begrenzungsrands (101) einer zu bearbeitenden Fläche (100) ausgebildet ist, und
eine Steuereinheit (60) aufweist, wobei die Steuereinheit dazu ausgebildet ist, mit dem Begrenzungsranderkennungsgerät zusammenzuwirken und eine Bewegung des Grünflächenbearbeitungsroboters auf der zu bearbeitenden Fläche derart zu steuern, dass der Grünflächenbearbeitungsroboter auf der zu bearbeitenden Fläche bleibt.

7. Autonomer mobiler Grünflächenbearbeitungsroboter (10) nach Anspruch 6,
wobei die Steuereinheit (60) dazu ausgebildet ist, ein Antreiben des zweiten motorangetriebenen Bearbeitungswerkzeugs (30) bei einer Erkennung des Begrenzungsrands (101) zu aktivieren und andernfalls das Antreiben des zweiten Bearbeitungswerkzeugs zu deaktivieren.

8. Autonomer mobiler Grünflächenbearbeitungsroboter (10) nach Anspruch 6 oder 7, wobei das Begrenzungsranderkennungsgerät (50) mindestens einen Magnetfeldsensor (51) umfasst oder
wobei das Begrenzungsranderkennungsgerät (50) einen Satelliten-Positionsbestimmungsempfänger (52) umfasst oder
wobei das Begrenzungsranderkennungsgerät (50) ein lokales Positionierungssystemgerät (53) umfasst.

9. Autonomer mobiler Grünflächenbearbeitungsroboter (10) nach einem der vorhergehenden Ansprüche, wobei der autonome mobile Grünflächenbearbeitungsroboter (10)
eine Benutzersteuerungseinrichtung (70),
eine benutzergesteuerte Betriebsart und
eine Betriebsartumschalteinrichtung (80) zur Umschaltung zwischen der autonomen Betriebsart und der benutzergesteuerten Betriebsart aufweist,
wobei in der benutzergesteuerten Betriebsart der Grünflächenbearbeitungsroboter mit seinem ersten motorangetriebenen Bearbeitungswerkzeug (20) und seinem zweiten motorangetriebenen Bearbeitungswerkzeug (30) mittels der Benutzersteuerungseinrichtung durch einen Benutzer gesteuert ist und die maximale kinetische Energie (Ekin2) des zweiten motorangetriebenen Bearbeitungswerkzeugs (30) größer als in der autonomen Betriebsart ist.

10. Autonomer mobiler Grünflächenbearbeitungsroboter (10) nach Anspruch 9,
wobei in der benutzergesteuerten Betriebsart die maximale kinetische Energie (Ekin2) des zweiten motorangetriebenen Bearbeitungswerkzeugs (30) oberhalb eines Grenzbereichs von 5 bis 25 Joule liegt.

11. Autonomer mobiler Grünflächenbearbeitungsroboter (10) nach Anspruch 9 oder 10, wobei der autonome mobile Grünflächenbearbeitungsroboter (10) einen Antriebsmotor (32) aufweist, wobei das zweite motorangetriebene Bearbeitungswerkzeug (30) mittels des Antriebsmotors angetrieben ist, und
wobei die Betriebsartumschalteinrichtung (80) dazu ausgebildet ist, bei der Umschaltung von der benutzergesteuerten Betriebsart in die autonome Betriebsart eine maximal verfügbare Antriebsleistung (Pow2) des Antriebsmotors zu drosseln.

## Claims

1. Autonomous mobile green area maintenance robot (10), comprising:
- a first motor-driven treatment tool (20),
- a second motor-driven treatment tool (30) differing from the first treatment tool, and
- an open protective housing (40) with a lateral rim (41),
- wherein the first treatment tool defines a first treatment zone (21) and is arranged within the protective housing such that the first treatment zone is located in a safety zone (42) of the protective housing, wherein the safety zone has a safety distance (43) to the lateral rim,
- wherein the second treatment tool defines a second treatment zone (31), wherein the second treatment zone is located at least partially beyond the safety zone, and
- wherein the autonomous mobile green area maintenance robot (10) has an autonomous operation mode,
**characterized in that**
- in the autonomous operation mode, a maximum kinetic energy (Ekin2) of the second motor-driven treatment tool is smaller than a maximum kinetic energy (Ekin1) of the first motor-driven treatment tool, wherein in the autonomous operation mode, a maximum kinetic energy (Ekin2) of the second motor-driven treatment tool (30) is in a limit range from 5 to 25 Joules.

2. Autonomous mobile green area maintenance robot (10) according to claim 1,
- wherein the first motor-driven treatment tool (20) and/or the second motor-driven treatment tool (30) each comprise/comprises at least one mowing line, at least one plastic knife, at least one metallic knife or a metallic cutting blade having at least one cutting edge and/or having at least one cutting tooth.

3. Autonomous mobile green area maintenance robot (10) according to claim 1 or 2,
- wherein the first motor-driven treatment tool (20) and/or the second motor-driven treatment tool (30) each are/is a rotating treatment tool.

4. Autonomous mobile green area maintenance robot (10) according to any of the preceding claims,
- wherein the safety distance (43) is at least 4 cm.

5. Autonomous mobile green area maintenance robot (10) according to any of the preceding claims,
- wherein the autonomous mobile green area maintenance robot (10) is configured such that, upon contact with an obstacle, the second motor-driven treatment tool (30) draws aside.

6. Autonomous mobile green area maintenance robot (10) according to any of the preceding claims, wherein the autonomous mobile green area maintenance robot (10) includes
- a boundary edge detection device (50), wherein the boundary edge detection device is configured to detect a boundary edge (101) of an area (100) to be treated, and
- a control unit (60), wherein the control unit is configured to cooperate with the boundary edge detection device and to control a movement of the green area maintenance robot on the area to be treated such that the green area maintenance robot remains on the area to be treated.

7. Autonomous mobile green area maintenance robot (10) according to claim 6,
- wherein the control unit (60) is configured to activate driving of the second motor-driven treatment tool (30) upon detection of the boundary edge (101) and, otherwise, to deactivate driving of the second treatment tool.

8. Autonomous mobile green area maintenance robot (10) according to claim 6 or 7,
- wherein the boundary edge detection device (50) comprises at least one magnetic field sensor (51), or
- wherein the boundary edge detection device (50) comprises a satellite position determination receiver (52), or
- wherein the boundary edge detection device (50) comprises a local positioning system device (53).

9. Autonomous mobile green area maintenance robot (10) according to any of the preceding claims, wherein the autonomous mobile green area maintenance robot (10) includes
- a user control device (70),
- a user-controlled operation mode and
- an operation mode switching device (80) for switching between the autonomous operation mode and the user-controlled operation mode,
- wherein in the user-controlled operation mode, the green area maintenance robot with its first motor-driven treatment tool (20) and its second motor-driven treatment tool (30) is controlled by a user by means of the user control device and the maximum kinetic energy (Ekin2) of the second motor-driven treatment tool (30) is greater than in the autonomous operation mode.

10. Autonomous mobile green area maintenance robot (10) according to claim 9,
- wherein in the user-controlled operation mode, the maximum kinetic energy (Ekin2) of the second motor-driven treatment tool (30) is above a limit range from 5 to 25 Joules.

11. Autonomous mobile green area maintenance robot (10) according to claim 9 or 10,
- wherein the autonomous mobile green area maintenance robot (10) has a drive motor (32), wherein the second motor-driven treatment tool (30) is driven by means of the drive motor, and
- wherein the operation mode switching device (80) is configured to reduce a maximum available drive power (Pow2) of the drive motor upon switching from the user-controlled operation mode to the autonomous operation mode.

## Revendications

1. Robot de traitement d'espaces verts (10), autonome et mobile, présentant :
- un premier outil de traitement motorisé (20),
- un deuxième outil de traitement motorisé (30) différent du premier outil de traitement, et
- un carter de protection ouvert (40) muni d'un bord latéral (41),
- dans lequel le premier outil de traitement définit une première zone de traitement (21) et est disposé dans le carter de protection de telle sorte que la première zone de traitement se trouve dans une zone de sécurité (42) du carter de protection, la zone de sécurité présentant une marge de sécurité (43) par rapport au bord latéral,
- dans lequel le deuxième outil de traitement définit une deuxième zone de traitement (31), la deuxième zone de traitement se trouvant au moins en partie en dehors de la zone de sécurité, et
- dans lequel le robot de traitement d'espaces verts (10), autonome et mobile, présente un mode de fonctionnement autonome,
**caractérisé en ce que**
- dans le mode de fonctionnement autonome, une énergie cinétique maximale (Ekin2) du deuxième outil de traitement motorisé est inférieure à une énergie cinétique maximale (Ekin1) du premier outil de traitement motorisé, l'énergie cinétique maximale (Ekin2) du deuxième outil de traitement motorisé (30) dans le mode de fonctionnement autonome se trouvant dans une zone limite de 5 à 25 joules.

2. Robot de traitement d'espaces verts (10), autonome et mobile, selon la revendication 1,
- dans lequel le premier outil de traitement motorisé (20) et/ou le deuxième outil de traitement motorisé (30) comprennent respectivement au moins un fil de coupe, au moins un couteau en matière synthétique, au moins un couteau en métal ou une lame en métal munie d'au moins une arête tranchante et/ou d'au moins une dent coupante.

3. Robot de traitement d'espaces verts (10), autonome et mobile, selon la revendication 1 ou 2,
- dans lequel le premier outil de traitement motorisé (20) et/ou le deuxième outil de traitement motorisé (30) sont respectivement réalisés sous forme d'outil de traitement rotatif.

4. Robot de traitement d'espaces verts (10), autonome et mobile, selon l'une quelconque des revendications précédentes,
- dans lequel la marge de sécurité (43) est d'au moins 4 cm.

5. Robot de traitement d'espaces verts (10), autonome et mobile, selon l'une quelconque des revendications précédentes,
- dans lequel le robot de traitement d'espaces verts (10), autonome et mobile, est réalisé de telle sorte que le deuxième outil de traitement motorisé (30) évite les obstacles en cas de contact.

6. Robot de traitement d'espaces verts (10), autonome et mobile, selon l'une quelconque des revendications précédentes, le robot de traitement d'espaces verts (10), autonome et mobile, présentant
- un appareil de reconnaissance de bordure de limitation (50), l'appareil de reconnaissance de bordure de limitation étant réalisé pour reconnaître une bordure de limitation (101) d'une surface à traiter (100), et
- une unité de commande (60), l'unité de commande étant réalisée pour coopérer avec l'appareil de reconnaissance de bordure de limitation et pour commander un déplacement du robot de traitement d'espaces verts sur la surface à traiter de telle sorte que le robot de traitement d'espaces verts reste sur la surface à traiter.

7. Robot de traitement d'espaces verts (10), autonome et mobile, selon la revendication 6,
- dans lequel l'unité de commande (60) est réalisée pour activer un entraînement du deuxième outil de traitement motorisé (30) en cas de reconnaissance de la bordure de limitation (101) et sinon pour désactiver l'entraînement du deuxième outil de traitement.

8. Robot de traitement d'espaces verts (10), autonome et mobile, selon la revendication 6 ou 7,
- dans lequel l'appareil de reconnaissance de bordure de limitation (50) comprend au moins un capteur de champ magnétique (51), ou
- dans lequel l'appareil de reconnaissance de bordure de limitation (50) comprend un récepteur de positionnement par satellite (52), ou
- dans lequel l'appareil de reconnaissance de bordure de limitation (50) comprend un appareil de système de positionnement local (53).

9. Robot de traitement d'espaces verts (10), autonome et mobile, selon l'une quelconque des revendications précédentes, le robot de traitement d'espaces verts (10) présentant
- un dispositif de commande utilisateur (70),
- un mode de fonctionnement commandé par l'utilisateur, et
- un dispositif de commutation de mode de fonctionnement (80) pour commuter entre le mode de fonctionnement autonome et le mode de fonctionnement commandé par l'utilisateur,
- dans lequel, dans le mode de fonctionnement commandé par l'utilisateur, le robot de traitement d'espaces verts avec son premier outil de traitement motorisé (20) et son deuxième outil de traitement motorisé (30) est commandé par un utilisateur au moyen du dispositif de commande utilisateur et l'énergie cinétique maximale (Ekin2) du deuxième outil de traitements motorisé (30) est plus grande que dans le mode de fonctionnement autonome.

10. Robot de traitement d'espaces verts (10), autonome et mobile, selon la revendication 9,
- dans lequel, dans le mode de fonctionnement commandé par l'utilisateur, l'énergie cinétique maximale (Ekin2) du deuxième outil de traitement motorisé (30) se situe au-dessus d'une zone limite de 5 à 25 joules.

11. Robot de traitement d'espaces verts (10), autonome et mobile, selon la revendication 9 ou 10,
- dans lequel le robot de traitement d'espaces verts (10), autonome et mobile, présente un moteur d'entraînement (32), le deuxième outil de traitement motorisé (30) étant entraîné au moyen du moteur d'entraînement, et
- dans lequel le dispositif de commutation de mode de fonctionnement (80) est réalisé pour limiter une puissance d'entraînement (Pow2) disponible maximale du moteur d'entraînement lors de la commutation du mode de fonctionnement commandé par l'utilisateur au mode de fonctionnement autonome.
